# EUROPEAN PATENT SPECIFICATION

(11) **EP 3 186 500 B1**
(45) Date of publication and mention of the grant of the patent: **25.07.2018**
(21) Application number: 15750420.0
(22) Date of filing: 12.08.2015
(51) Int. Cl.: F04B 9/04, F04B 53/20, F16K 17/04, F02M 59/10, F02M 59/44, F02M 55/00, F04B 53/06, F02M 63/00

(54) **A HIGH PRESSURE FUEL PUMP WITH AN EVACUATION ASSEMBLY**
HOCHDRUCKKRAFTSTOFFPUMPE MIT EINER ENTLEERUNGSANORDNUNG
POMPE À CARBURANT À HAUTE PRESSION AVEC ENSEMBLE D'ÉVACUATION

(30) Priority: 27.08.2014 GB 201415141
(43) Date of publication of application: 05.07.2017
(73) Proprietor: Delphi International Operations Luxembourg S.à r.l., 4940 Bascharage (LU)
(72) Inventor: MCHATTIE, James T. D., Bean Kent DA2 8AL (GB)
(74) Representative: Delphi France SAS
(86) International application number: PCT/EP2015/068594
(87) International publication number: WO 2016/030198

(56) References cited:
- WO-A1-01/40656
- WO-A1-2014/087188
- DE-A1- 10 239 777
- DE-A1- 19 525 397

## Description

### BACKGROUND

### Technical Field

The present invention relates generally to the field of evacuation assemblies. More particularly, the present invention concerns an evacuation assembly and arrangement for an evacuation orifice of a high pressure fuel pump.

### Description of the Related Art

DE19525397 discloses a pump as per the preamble of claim 1. There is a demand for high pressure fuel pumps such as diesel fuel pumps to operate with greater fuel efficiency. One area for improvement to achieve the greater fuel efficiency is to reduce the permeability of the pump. Areas for reducing permeability typically focus on leakages through bearing clearances, plunger clearances and drillings designed to evacuate the pump of air (evacuation drillings).

A typical high pressure fuel pump comprises a pumping head mounted on a pump housing. The pumping head receives fuel via a pumping plunger that drives fuel up through a bore within the pumping head. The pumping plunger is moved by a drive mechanism that is housed within the pump housing. The drive mechanism takes the form of a cam box with a cam and a follower arrangement to drive the pumping plunger in reciprocal linear motion along a pumping axis.

During normal operation of the drive mechanism, air collects above the fuel level within the cam box. If the air is not given an obvious evacuation path, the increased pressure of the air often finds an escape route out of the cam box by forcing itself past, for example, the load-bearing surfaces. Such escape events leave the load-bearing surfaces 'dry' as the air passes through and even if this is only for a very short period of time, it is expected to affect the longevity and durability of various pump components.

Accordingly, evacuation drillings are provided in the cam box to provide an obvious evacuation path for the collected air. The drillings comprise small orifices, typically less than 1mm in diameter, and are usually positioned at the highest possible position within the cam box housing.

Known designs for evacuation drillings take the form of either a plain drilled bore or orifice in the cam box housing, or a screwed in/ pressed-in body with an orifice for fitting in such a bore.

To minimise blockage of evacuation orifices by debris from upstream part wear, a filter is usually required across the orifice. The location of such small filters add cost and production complexity to pump manufacture.

Whilst these known designs for evacuation drillings provide an escape pathway for the air, they also increase the permeability of the pump. On the other hand, the minute size of the orifices provides only a low flow rate which hampers air evacuation in high-pressure events, production flushing and washing processes.

Therefore, striking the balance between providing effective evacuation of air, reducing blocking of the orifices and minimising pump permeability presents a considerable technical problem.

It is an object of the present invention to address one or more of the problems of known designs for evacuation orifices as discussed herein or otherwise.

Therefore, it is now desired to provide an improved assembly for an evacuation orifice, which provides effective evacuation of air and allows a rapid flushing capability whilst minimising pump permeability. It is also desired to provide a self-clearing assembly as well as an improved arrangement for an evacuation orifice that may also reduce pump cost and production complexity.

### SUMMARY OF THE INVENTION

In one aspect of the present invention there is provided a high pressure fuel pump comprising an evacuation orifice assembly, the assembly comprising: a first member adapted to be disposed across an evacuation orifice and comprising at least one opening therein; and a second member with a lead portion adapted to be disposed within said opening(s), wherein the assembly is adapted to provide a first predetermined flow-rate of fluid through the opening(s) when the lead portion is in a first position within the opening(s), and to selectively enlarge the opening(s) to provide a second predetermined flow-rate of fluid through the opening(s) when the lead portion is in a second position within said opening(s).

With this assembly, the first position provides effective evacuation of fluid, such as air and fuel (e.g. diesel), at a steady and predetermined rate through the opening(s) in the first position. In addition, the configuration of the members is capable of providing a higher rate of evacuation when required by selectively operating to enlarge the at least one opening. This selective operability takes into consideration the objective to minimise permeability within high pressure pumps balanced against the necessity to release high pressures within the pump that could otherwise damage pump components. The enlargement operation increases passage of fluid over the surface of the first and second members which has the effect of cleaning or clearing debris between the members to optimise flow-rate through the opening(s) in the first position.

By 'selectively enlarged' what is meant is a change in cross-sectional area of the opening(s) of the first member to allow the opening(s) to pass a greater flow of fluid there through in response to a predetermined change in conditions.

The term 'evacuation orifice' is intended to include bores drilled directly into pump housings in addition to bores provided in retro-fitted bodies as discussed above.

Preferably, the first predetermined flow-rate in the first position provides a 'restricted' flow-rate of fluid through the opening(s) compared with the second position. The first position may therefore, provide a 'restricted' cross-section to the opening(s). The restricted cross-section may be achieved by the position of a head part of the lead portion within each of the opening(s). Preferably, each head part is adapted to present a substantially obstructed condition to the respective opening to provide 'restricted' flow of fluid through the opening at the first predetermined flow-rate.

Preferably, the second predetermined flow-rate in the second position provides an 'increased' flow-rate of fluid through the opening(s). The second position may therefore, provide an 'increased' cross-section to the opening(s). The increased cross-section may be achieved by the position of a neck part of the lead portion within each of the opening(s). Preferably, each neck part is adapted to present a partially unobstructed condition to the respective opening to provide 'increased' flow of fluid through the opening at the second predetermined flow-rate.

Preferably, the enlargement of the at least one opening is responsive to changes in pressure acting on the assembly. Preferably, the opening is selectively enlarged in response to an increase in pressure in a pressure-fluctuating chamber and is returned to the limited cross-section opening in response to a decrease in pressure in said chamber.

By 'pressure-fluctuating chamber' what is meant is a compartment of the pump that experiences differences in pressure during typical operation, e.g. a cam box.

Preferably therefore, in a first set of conditions, where pressure in the chamber is below a predetermined level, the at least one opening is substantially obstructed by the head part of the lead portion.

Preferably, in a second set of conditions, where pressure in the chamber is above a predetermined level, the at least one opening is partially obstructed by the neck part of the lead portion. Preferably, in this second position, the head part is clear of the opening.

The first member is adapted to be moveable, preferably slidable, between the first position and the second position in the orifice. Preferably, the position of the second member in the orifice is substantially fixed.

Alternatively, the second member may be adapted to be moveable, preferably slidable, between the first position and the second position in the orifice. Preferably, therefore, the position of the first member in the orifice is substantially fixed.

Preferably, the assembly comprises an abutment provided at a first end of the evacuation orifice and adapted to provide a seat for a first side of the first member. Preferably, the abutment comprises a narrowing of the internal profile of the orifice. The abutment may therefore comprise an integrally formed, or an otherwise retro-fitted protruding flange within the orifice. Preferably, the abutment is provided at, or close to a first end of the orifice, most preferably, the first end being disposed adjacent the pressure-fluctuating chamber.

Preferably, the first member is adapted to be seated against the abutment in the first position.

The abutment preferably comprises a substantially flat internally-disposed face. The internally-disposed face preferably provides a seat for a first side of the first member. Accordingly, the first side of the first member may be adapted to confront the pressure-fluctuating chamber.

The internally-disposed face may be continuous or intermittent. Most preferably, the internally-disposed face is continuous, to minimise leakage of fluid around the periphery of the first member.

Alternatively, the internally-disposed face may be configured to provide discrete intermittent components to increase the exposure of the first side of the first member to pressure from the pressure fluctuating chamber.

Preferably, the first member is adapted to be distanced from the abutment in the second position. Preferably therefore, the first member is adapted to be resiliently deflectable along the axis of the orifice, e.g. spring-loaded. Preferably, therefore, the assembly further comprises a resilient compression member for seating against a second side of the first member. The resilient compression member may be adapted to exert force on the second face of the first member. The resilient compression member is preferably a hollow, open-ended body, so as to provide minimal obstruction in the orifice, preferably, a spring.

Preferably, the resilient compression member is set to yield (compress) upon exposure to pressure above a predetermined level acting on the first member. The predetermined level may be set at the maximum normal running pressure of a pressure-fluctuating chamber. The predetermined level will depend upon the pump. Therefore, the predetermined level may be 4 bar gauge pressure (5bar atmospheric pressure), or as low as 0.3bar. The spring rate and pre-load would be chosen on an application by application basis.

Preferably, the spring is seated against an abutment provided by the second member. The abutment preferably comprises a base portion of the second member.

Preferably, first member comprises a body with a concave hollow on one side thereof. The first member may comprise a bowl- shape on one side. The body may comprise a relatively thin, rigid body. Preferably, the concave hollow is uniform, and may provide a substantially uniform curvature therearound. Preferably, the first side of the body comprises a substantially flat base with peripheral walls extending therefrom. Preferably, the walls are substantially straight and are arranged substantially perpendicular to the base. Preferably, the second side of the bowl comprises the concave hollow.

Preferably, the first member comprises a single opening. The single opening is preferably substantially centrally disposed through the member and at a base of the concave hollow.

However, it will be appreciated that the first member may comprise a plurality of such openings therethrough, each opening being disposed around the singular concave hollow, or alternatively having a concave hollow of their own.

Preferably, the peripheral walls of the body of the first member provide a peripheral profile that generally mirrors the internal profile of the orifice. Preferably, the peripheral profile of the body comprises dimensions that provide a close clearance fit of the first member within the orifice. Preferably, the dimensions are configured so as to permit sliding of the first member along the axis of the orifice. Preferably, the first member comprises a substantially circular external body shape, although other body shapes could be adopted to for the internal profile of the target orifice.

Preferably, the first member comprises a thickness of between approximately 1 mm and 10 mm. The first member may comprise a thickness of between approximately 3 mm and 4 mm. With a thickness in this range, a 5 mm - 12 mm diameter member, for example, is able to slide up and down an orifice or bore, of say, just over 5 mm or just over 13 mm diameter respectively without tilting. Preferably, there is a tolerance of between 20 µm and 1 mm clearance distance between the orifice and the first member.

Preferably, the base of the hollow extends to a depth of approximately 50% to approximately 75% of the peripheral depth of the body. Preferably, therefore, the opening comprises a depth of approximately 50% to approximately 25% of the peripheral depth of the body. Most preferably, the base of the hollow extends to a depth of approximately 75% of the peripheral depth of the body, whereas the opening comprises a depth of approximately 25% of the peripheral depth of the body.

The diameter of the body may be approximately 5 mm to 12 mm. The diameter to the opening may be approximately 30% to approximately 70% of the diameter of the body.

Preferably, the lead portion of the second member comprises at least one head at the end of at least one neck. Preferably, each head is sized to sit within one of said openings of the first member whilst providing a peripheral clearance there around to provide for the first predetermined (restricted) rate of flow through the opening. Preferably, each neck is substantially narrower than the head and is sized to sit within an opening of the first member whilst providing a greater peripheral clearance there around to provide for the second predetermined (restricted) rate of flow through the opening.

Preferably, the second member is adapted such that when the neck is within the opening of the first member, the head protrudes beyond the first side of the first member. However, in an alternative arrangement, the head may protrude beyond the second side of the first member.

Preferably, the second member comprises the base portion rearwardly of the neck. The base portion preferably, comprises a peripheral profile that generally mirrors the internal profile of the orifice. Preferably, the peripheral profile of the base portion comprises dimensions that provide a close clearance fit of the second member within the orifice. Preferably, the dimensions are configured so as to prevent or minimise sliding of the second member along the axis of the orifice. Preferably, the base portion comprises a substantially circular external body shape, although other body shapes could be adopted to for the internal profile of the target orifice.

Preferably, the neck gradually increases in thickness to provide a shoulder portion between the neck and the base portion. This may be achieved by an outwardly curved or straight taper.

Preferably, the base portion comprises at least one bore therethrough, preferably, still at least two bores therethrough. The bores are adapted to allow relatively unrestricted flow of fluid past the base portion in the orifice. Preferably, the bores also extend through the shoulder portion.

Alternatively, the base portion may comprise one or more peripheral apertures, recesses, or scallops to create pathways between the orifice and the base portion to allow relatively unrestricted flow of fluid past the base portion in the orifice.

The first member may comprise a porous member adapted to provide a supplemental predetermined flow-rate of fluid through the member in addition to the opening. The porous member may be permeable to fuel and air. Preferably, the porous member is substantially permeable to air and substantially impermeable to fuel. Preferably, the permeability of the porous member is at least in part provided by the property of a construction material. Preferably, therefore, the construction material may be inherently permeable by providing natural or engineered (by method of production) pores or interstices therein. The porous member may comprise one or more of the following materials: sinter, ceramic, untreated aluminium. Preferably, the porous member comprises untreated aluminium.

Preferably, the assembly forms part of an evacuation orifice arrangement adapted to be fitted within an existing bore in the pump. The arrangement may comprise a body adapted to fit within the existing bore, comprising an open-ended evacuation orifice through the body. Preferably, the evacuation orifice assembly is disposed within the open-ended evacuation orifice. Preferably, the arrangement comprises a resilient compression member set to yield (compress) upon exposure to pressure above a predetermined level and adapted to exert force on the first member within the orifice.

In a second aspect of the invention there is provided a high pressure fuel pump comprising an evacuation orifice arrangement adapted to be fitted within an existing bore in the pump, the arrangement comprising: a body adapted to fit within the existing bore, comprising an open-ended evacuation orifice through the body; an evacuation assembly according to the first aspect of the invention; and a resilient compression member set to yield (compress) upon exposure to pressure above a predetermined level and adapted to exert force on the first member within the orifice.

In a third aspect of the invention there is provided a high pressure fuel pump comprising an evacuation orifice arrangement adapted to be fitted within an existing bore in the pump, the arrangement comprising: a body adapted to fit within the existing bore, comprising an open-ended evacuation orifice through the body; an evacuation assembly comprising a first member adapted to be disposed across the evacuation orifice and comprising at least one opening therein, a second member with a lead portion adapted to be disposed within said opening(s), wherein the assembly is adapted to provide a first predetermined flow-rate of fluid through the opening(s) when the lead portion is in a first position within the opening(s), and to selectively enlarge the opening(s) to provide a second predetermined flow-rate of fluid through the opening(s) when the lead portion is in a second position within said opening(s); and a resilient compression member set to yield (compress) upon exposure to pressure above a predetermined level and adapted to exert force on the first member within the orifice.

It will be appreciated that the preferred features described in relation to the first aspect of the invention also apply to the second aspect of the invention.

Preferably, the second member provides an abutment in the orifice adapted to provide a seat for the resilient compression member. The resilient compression member is preferably a hollow, open-ended body, so as to provide minimal obstruction in the orifice, preferably, a spring.

The body may be fitted and retained within the existing bore by screw-fit or press-fit components.

In a fourth aspect of the invention there is provided an evacuation orifice assembly for an evacuation orifice of a high pressure fuel pump, the assembly comprising: a first member adapted to be disposed across the evacuation orifice and comprising at least one opening therein; and a second member with a lead portion adapted to be disposed within said opening(s), wherein the assembly is adapted to provide a first predetermined flow-rate of fluid through the opening(s) when the lead portion is in a first position within the opening(s) and to selectively enlarge the opening(s) to provide a second predetermined flow-rate of fluid through the opening(s) when the lead portion is in a second position within said opening(s).

It will be appreciated that the preferred features described in relation to the first aspect of the invention also apply to the third aspect of the invention.

In a fifth aspect of the invention there is provided an evacuation orifice arrangement for an existing bore of a high pressure fuel pump, the arrangement comprising: a body adapted to fit within the existing bore, comprising an open-ended evacuation orifice through the body; an evacuation assembly comprising a first member adapted to be disposed across the evacuation orifice and comprising at least one opening therein, a second member with a lead portion adapted to be disposed within said opening(s), wherein the assembly is adapted to provide a first predetermined flow-rate of fluid through the opening(s) when the lead portion is in a first position within the opening(s) and to selectively enlarge the opening(s) to provide a second predetermined flow-rate of fluid through the opening(s) when the lead portion is in a second position within said opening(s); and a resilient compression member set to yield (compress) upon exposure to pressure above a predetermined level and adapted to exert force on the first member within the orifice.

It will be appreciated that the preferred features described in relation to the first and second aspects of the invention also apply to the fourth aspect of the invention.

It will also be appreciated that the preferred features described in relation to each of the above aspects of the invention also apply to the other aspects of the invention where applicable.

### BRIEF DESCRIPTION OF THE DRAWINGS

For a better understanding of the invention, and to show how exemplary embodiments may be carried into effect, reference will now be made to the accompanying drawings in which:
Figure 1 is a perspective exploded view of an evacuation orifice arrangement according to the invention;
Figure 2 is a perspective view of each of the components of the arrangement of Figure 1;
Figure 3 is a cross-sectional view of the arrangement of Figure 1 in use and in a first position;
Figure 4 is a cross-sectional view of the arrangement of Figure 1 in use and in a second position;
Figure 5 is an alternative cross-sectional view of the arrangement of Figure 1 in use and in a first position.

### DETAILED DESCRIPTION OF THE EXEMPLARY EMBODIMENTS

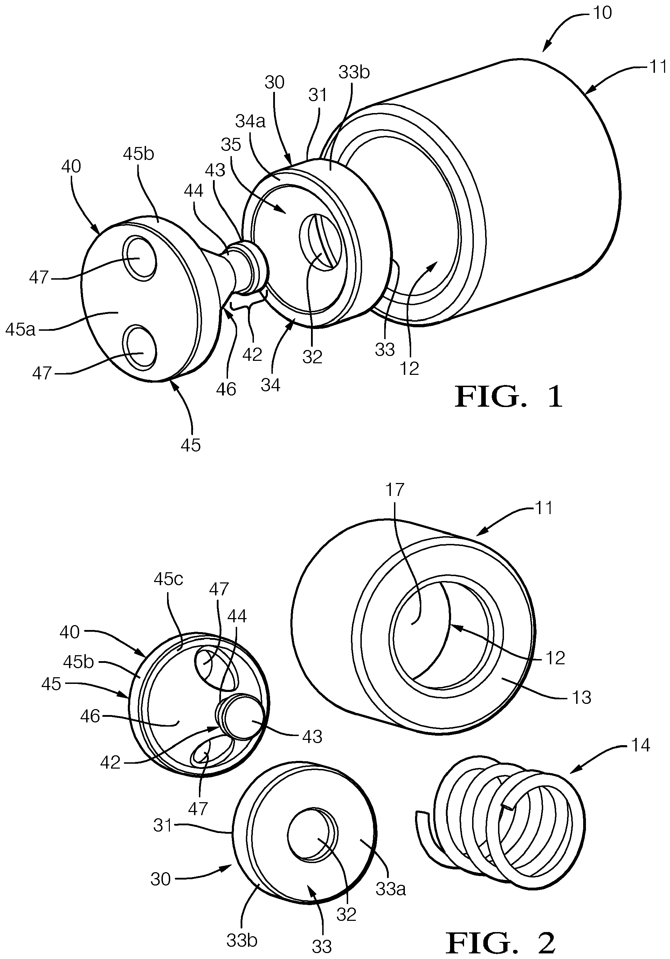

Figures 1 - 5 show an evacuation orifice arrangement 10 for an existing bore (not shown) of a high pressure fuel pump (not shown), the arrangement 10 comprising: a body 11 adapted to fit within the existing bore, comprising an open-ended evacuation orifice 12 through the body 11; an evacuation assembly comprising a first member 30 adapted to be disposed across the evacuation orifice 12 and comprising at least one opening 32 therein, a second member 40 with a lead portion 42 adapted to be disposed within said opening(s) 32 , wherein the assembly is adapted to provide a first predetermined flow-rate of fluid through the opening(s) 32 when the lead portion 42 is in a first position within the opening(s) 32, and to selectively enlarge the opening(s) 32 to provide a second predetermined flow-rate of fluid through the opening(s) 32 when the lead portion 42 is in a second position within said opening(s) 32; and a resilient compression member 14 set to yield (compress) upon exposure to pressure above a predetermined level and adapted to exert force on the first member 30 within the orifice 12.

The first member 30 comprises a generally disc-shaped rigid body 31, having a first side 33 and a second side 34. The first side 33 of the body 31 comprises a substantially flat face 33a with an annular peripheral wall 33b extending therefrom. The wall 33b is substantially straight and is arranged to be substantially perpendicular to the face 33a. The wall 33b provides a peripheral profile that generally mirrors the internal profile of the orifice 12 and comprises dimensions that provide a close clearance fit of the first member 30 within the orifice 12. However, the dimensions of the first member 30 are configured so as to permit sliding of the first member 30 along the axis of the orifice 12.

The second side 34 of the body 31 comprises a narrow peripheral face 34a therearound. Within the bounds of the peripheral face 34a, the second side 34 comprises a generally uniform concave hollow 35 with a substantially uniform curvature.

In a preferred embodiment of the invention and as shown in the Figures, the first member 30 comprises a single opening 32 through the body 31. The opening 32 is substantially centrally disposed 30 so as to be located at a base of the concave hollow 35 from the second side 34 through to the first side 33. However, it will be appreciated that the first member 30 may comprise a plurality of such openings 32 therethrough, each opening 32 being organised either around the singular concave hollow 35, or alternatively being located centrally of individual concave hollows 33 of their own in a 'pocketed' second side 34 arrangement.

The peripheral depth of the body 31 of the first member 30 (the depth external wall 33b) can be between approximately 1 mm and 10 mm. The base of the hollow 35 extends to a depth of approximately 75% of the peripheral depth of the body 31. Accordingly, the opening 32 makes up the remaining approximately 25% of the peripheral depth of the body 31. Accordingly, with a peripheral depth of the body 31 of 10 mm, the hollow 35 is approximately 7.5 mm deep at the base and the opening 32 is approximately 2.5 mm deep.

The diameter of the body 31 can be approximately 5 mm to approximately 12 mm. With a diameter of approximately 12 mm diameter member 30, for example, the member 30 is able to slide up and down an orifice 12 or bore, of say, just over 12 mm diameter without tilting. Preferably, there is a tolerance of between 20 µm and 1 mm clearance distance between the orifice 12 and the member 30.

The diameter to the opening 32 is approximately 30% to approximately 70% of the diameter of the body 31. Accordingly, with a body 31 diameter of 12 mm, the opening is can be between approximately 3.6 mm to approximately 8.4 mm in diameter.

The lead portion 42 of the second member 40 comprises a head 43 at the end of a neck 44. Both the head and the neck 44 comprise short cylindrical sections. The head 43 is wider than the neck 44.

In one embodiment, the head 43 is approximately 3 mm in diameter to sit within an opening 32 of approximately 3.6 mm diameter, and with a depth approximately equal to that of the opening 32. The neck 44 is approximately 2 mm in diameter, with a length approximately 10 - 20% longer than that of the depth of the opening 32 to create a clear path around the head 43.

Accordingly, the head 43 is sized to sit substantially within the opening 32 of the first member 30 whilst providing a peripheral clearance there around to allow for the first predetermined (restricted) rate of flow through the opening 32. In addition, each neck 44 is narrower than the head 43 and is sized to sit within an opening 32 of the first member 30 whilst providing a greater peripheral clearance there around to provide for the second predetermined (restricted) rate of flow through the opening 32. With the arrangement shown in the Figures, the second member 40 is adapted such that when the neck 44 is within the opening 32 of the first member 30, the head 43 protrudes beyond the first side of the first member 30 to provide a wider flow path. However, in an alternative arrangement, the head 43 may protrude beyond the second side of the first member 30.

The second member 40 comprises the lead portion 42 joined with a base portion 45 via a cone-shaped shoulder portion 46. The lead portion 42, base portion 45 and shoulder portion 46 share a common central axis. At the base of the neck 44, the body of the second member 40 gradually increases in width to provide the shoulder 46 between the lead portion 42 and the base portion 45. The base portion 45 comprises a circular disc section comprising a flat bottom 45a, a short straight peripheral wall 45b extending perpendicularly from the bottom 45a, and a narrow peripheral annular face 45c substantially parallel with the bottom 45a. The face 45c adjoins the shoulder 46 at its widest part.

The peripheral profile of the base portion 45 generally mirrors the internal profile of the orifice 12 and comprises dimensions that provide a snug fit of the second member 40 within the orifice 12, so as to prevent or minimise sliding of the second member 40 along the axis of the orifice 12.

Two open-ended bores 47 extend through the base portion 45 (inwardly of the face 45c) and through the shoulder 46. The bores 47 are diametrically opposed on the base portion 45/ shoulder 46 and extend in a direction parallel to the axis of the second member 40. The bores 47 are adapted to allow relatively unrestricted flow of fluid past the base portion 45 in the orifice 12.

It is to be appreciated that in another embodiment of the invention, the base portion 45 can comprise one or more peripheral apertures, recesses, or scallops in addition or alternatively to the bores 47, to create pathways between the orifice 12 and the base portion 45 and provide relatively unrestricted flow of fluid past the base portion 45 in the orifice 12.

The size, shape and spacing of the bores 47 (or any scallops/ recesses/ apertures) is important to provide a balanced base portion 45 to aid uniform sliding movement within the orifice 12. However, the size of the bores 47 (or any scallops/ recesses/ apertures) is engineered to handle an optimal unrestricted rate of fluid flow when the openings 32 of the first member 30 are at their optimum enlarged state, whilst taking into account fluid dynamics.

The second member 40 provides a seat for the for the resilient compression member 14 in the form of the face 45c. Likewise, the first member 30 provides a seat for the for the resilient compression member 14 in the form of the face 34a.

It is important that the resilient compression member 14 comprises a hollow, open-ended body, so as to provide minimal obstruction to fluid flow in the orifice 12, such as a spring.

The body 11 adapted to fit within an existing bore (not shown) is shown as cylindrical in the Figures. However, it is to be appreciated that in practice the body 11 comprises an external shape and profile to match the internal shape and profile of an existing bore. Accordingly, the body 11 is adapted to be fitted and retained within the existing bore by screw-fit or press-fit components (not shown).

Within the body 11, there is provided an abutment comprising an integrally-formed protruding flange 13 at, or close to a first end of the orifice 12. The first end of the orifice 12 communicates with a pressure-fluctuating chamber (not shown) within the pump, e.g. a cam box (not shown). The flange 13 defines a centrally disposed aperture 17 for communication between the orifice 12 and the pressure-fluctuating chamber. The flange 13 also provides a substantially flat internally-disposed face 16 around the aperture 17. It is to be appreciated, that such a flange 13 may be retro-fitted to an orifice 12.

In use, the first member 30 is entered into the orifice 12 with the first face 33 leading, until the first face 33 abuts the face 16 of the flange 13. The resilient compression member 14 is then entered into the orifice 12 until one end abuts the peripheral face 34a of the first member 30. The second member 40 follows the resilient compression member 14 with the head 43 leading, until the face 45c of the second member 40 abuts the other end of the resilient compression member 14. The second member 40 is then moved further into the orifice 12 to compress the compression member 14 until the head 43 sits substantially within the opening 32 of the first member 30. Ideally, the head 43 protrudes slightly beyond the first face 33 of the first member 30 to sit slightly within the aperture 17 provided by the flange 13 in the body 11. The second member 40 is fixed or otherwise held in position.

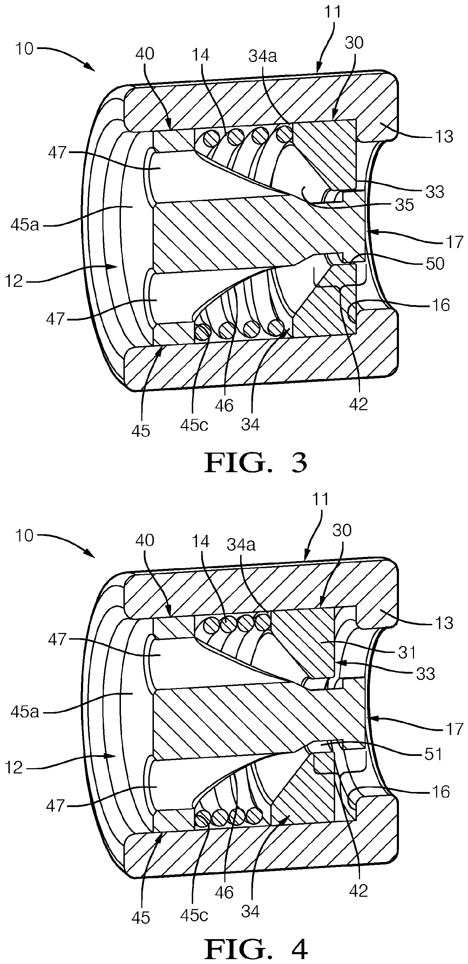

In this configuration, the assembly is in a first position as shown in Figure 3 with the first face 33 of the first member 30 firmly seated against the internally-disposed face 16 of the flange 13 by the force exerted by the spring 14 on the second face 34a. The spring 14 is seated against the static second member 40. As such the opening 32 is substantially occupied by the head 43 of the second member 40 so that the flow-rate of fluid from the pressure-fluctuating chamber into the orifice 12 is substantially restricted to flow through the narrow annular channel 50 provided between the head 43 and the first member 30. Once fluid is through the channel 50 and past the head 43, the concave hollow 35 of the first member 30 provides a substantially opens flow path which is relatively unhindered by the following spring 14. The concave hollow 35 reduces turbulence and helps to direct flow in central column through the orifice 12. The fluid can then pass through the bores 47 of the shoulder 46 and the base portion 45 and subsequently out of the orifice 12.

In a second position as shown in Figure 4, the spring 14 is compressed. The spring 14 is set to yield above a predetermined pressure level. Ideally, the predetermined pressure level corresponds with the normal operating pressure of the pressure-fluctuating chamber for the pump in use. In one example, where then normal gauge pressure is 4 bar in a pressure-fluctuating chamber, the spring 14 is set to yield above approximately 4 bar. In another example, where the normal gauge pressure is 0.3 bar in a pressure-fluctuating chamber, the spring 14 is set to yield at above approximately 0.3 bar.

Accordingly, when the pressure in the pressure-fluctuating chamber increases above the predetermined level, the pressure acting on the first face 33 of the first member 30 causes the spring 14 to yield (compress), allowing the first member 30 to be displaced from the first position against the flange 13. The backward movement of the first member 30 relative to the static second member 40 causes the opening 32 to move beyond the head 43 to be disposed around the neck 44 of the second member 40. As such, the opening 32 is only partially occupied by the neck 44 of the second member 40 so that the flow-rate of fluid from the pressure-fluctuating chamber into the orifice 12 is no longer restricted to flow through the narrow channel provided between the head 43 and the first member 30. A greater flow of fluid is permitted between the wider annular channel 51 between the first member 30 and the neck 44. Again, once fluid is through the channel 51 and past the neck 44, the concave hollow 35 of the first member 30 substantially opens up the flow path which is relatively unhindered by the following spring 14. The fluid can then pass through the bores 47 of the shoulder 46 and the base portion 45 and subsequently out of the orifice 12.

When the pressure from the pressure-fluctuating chamber falls to, or below the normal operating pressure of the pressure-fluctuating chamber, the force upon the first face 33 of the first member 30 is insufficient to retain the compression on the spring 14. Therefore, the spring 14 decompresses and the first member 30 is pushed back against the flange 13 by the spring 14 to adopt the first position.

The arrangement provides effective evacuation of fluid, such as air and fuel, at a steady and predetermined rate through a restricted opening 32 when pressure in the pressure-fluctuating chamber is below the predetermined level, e.g. during normal running of the pump. In addition, the arrangement is capable of providing a higher rate of evacuation when required by selectively enlarging the opening 32, e.g. during key-on over-pressure events (e.g. when a lift pump is pulling fuel from a tank and pressurizing a high pressure pump cam box), but a high pressure pump isn't operating, or during production flushing events, or if arrangement becomes blocked.

This selective operability takes into consideration the objective to minimise permeability within high pressure pumps balanced against the necessity to release high pressures within the pump that could otherwise damage pump components. The selective enlargement increases passage of fluid over the surfaces of the first member 30 and the second member 40, which has the effect of cleaning or clearing the surfaces to optimise functionality in the first position.

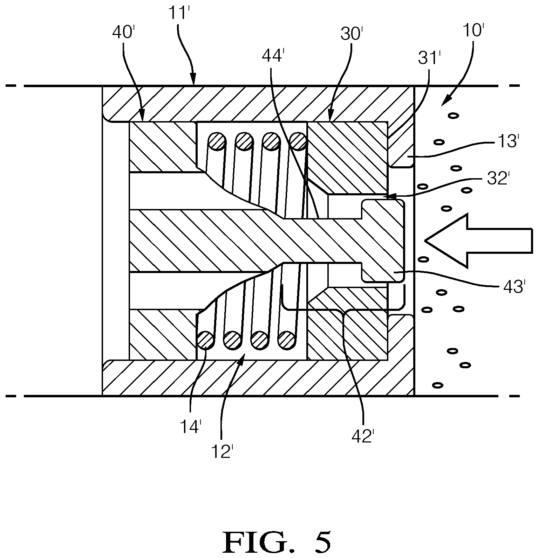

Figure 5 shows a similar arrangement to that of Figures 1 to 4, in which the first member 30' comprises a disc-shaped body 31' comprising two substantially flat faces 33', 34' and a centrally located opening 32' therethrough. In this arrangement, the neck 44' of the lead portion 42' of the second member 40' is longer to account for the depth of the opening 32'.

Although a few preferred embodiments have been shown and described, it will be appreciated by those skilled in the art that various changes and modifications might be made without departing from the scope of the invention, as defined in the appended claims.

For example, in an adapted embodiment of the invention, the first member 30 may comprise a porous body 31 to provide an additional predetermined flow-rate of fluid through the body 31 of the member 30. The first member 31 could be made to be inherently permeable, made from a normally porous material, or imparted with porosity during a production process, e.g. untreated aluminium. The porosity of the material would provide a certain flow-rate of fluid through the body 31. However, the permeability of the body 31 could be further influenced by manipulating the thickness or depth of the body 31.

## Claims

1. A high pressure fuel pump comprising an evacuation orifice assembly, the assembly comprising: a first member (30) adapted to be disposed across an evacuation orifice (12) and comprising at least one opening (32) therein; and a second member (40) with a lead portion (42) adapted to be disposed within said opening(s) (32), wherein the assembly is adapted to provide a first predetermined flow-rate of fluid through the opening(s) (32) when the lead portion (42) is in a first position within the opening(s) (32), and to selectively enlarge the opening(s) (32) to provide a second predetermined flow-rate of fluid through the opening(s) (32) when the lead portion (42) is in a second position within said opening(s) (32);
wherein the first member (30) is adapted to be slidable, between the first position and the second position in the orifice (12).

2. The high pressure fuel pump according to claim 1, wherein the assembly forms part of an evacuation orifice arrangement adapted to be fitted within an existing bore in the pump, the arrangement comprising a body (11) adapted to fit within the existing bore, comprising an open-ended evacuation orifice (12) through the body (11) and the evacuation orifice assembly is disposed within the open-ended evacuation orifice (12).

3. The pump according to claim 1 or 2, wherein the first predetermined flow-rate in the first position provides a restricted flow-rate of fluid through the opening(s) (32) compared with the second position.

4. The pump according to claim 3, wherein the first position provides a restricted cross-section to the opening(s) (32) achieved by the position of a head part of the lead portion (42) within each of the opening(s) (32) to present a substantially obstructed condition to the respective opening (32).

5. The pump according to any one of claims 1 to 4, wherein the second predetermined flow-rate in the second position provides an increased flow-rate of fluid through the opening(s) (32).

6. The pump according to any one of claims 1 to 5, wherein the second position provides an increased cross-section to the opening(s) (32) achieved by the position of a neck part of the lead portion (42) within each of the opening(s) (32) to present a partially unobstructed condition to the respective opening (32).

7. The pump according to any one of claims 4 to 6, wherein the opening(s) (32) are selectively enlarged in response to an increase in pressure in a pressure-fluctuating chamber and are returned to the restricted cross-section in response to a decrease in pressure in said chamber.

8. The pump according to claim 7, wherein in a first set of conditions, where pressure in the chamber is below a predetermined level, the at least one opening (32) is substantially obstructed by the head part of the lead portion (42).

9. The pump according to any one of claims 7 or 8, wherein in a second set of conditions, where pressure in the chamber is above a predetermined level, the at least one opening (32) is partially obstructed by the neck part of the lead portion (42).

10. The pump according to any one of claims 1 to 9, wherein the assembly further comprises a resilient compression member (14) adapted to exert force on a second face of the first member (30) and set to yield (compress) upon exposure to pressure above a predetermined level acting on the first member (30).

11. The pump according to any one of claims 1 to 10, wherein first member (30) comprises a body with a concave hollow on one side thereof, with a single opening (32) substantially centrally disposed through the member (30) and at a base of the concave hollow.

12. The pump according to any one of claims 1 to 11, wherein a base portion of the second member (40) comprises a peripheral profile with dimensions configured so as to prevent or minimise sliding of the second member (40) along the axis of the orifice (12).

13. The pump according to claim 12, wherein the base portion comprises at least two bores therethrough to allow relatively unrestricted flow of fluid past the base portion in the orifice (12).

14. The pump according to any one of claims 11 to 13 when depending upon claim 10, wherein the second member (40) provides an abutment in the orifice (12) adapted to provide a seat (45c) for the resilient compression member (14).

## Patentansprüche

1. Hochdruckkraftstoffpumpe mit einer Entlüftungsdüsenanordnung, wobei die Anordnung aufweist: ein erstes Element (30), das ausgebildet ist, über einer Entlüftungsdüse (12) angeordnet zu sein, und zumindest eine Öffnung (32) darin aufweist; und ein zweites Element (40) mit einem Leitungsabschnitt (42), der ausgebildet ist, innerhalb der/den Öffnung(en) (32) angeordnet zu sein, wobei die Anordnung ausgebildet ist zum Vorsehen einer ersten vorgegebenen Strömungsrate von Fluid durch die Öffnung(en) (32), wenn der Leitungsabschnitt (42) in einer ersten Position innerhalb der Öffnung(en) (32) ist, und zum selektiven Vergrößern der Öffnung(en) (32), um eine zweite vorgegebene Strömungsrate von Fluid durch die Öffnung(en) (32) vorzusehen, wenn der Leitungsabschnitt (42) in einer zweiten Position innerhalb der Öffnung(en) (32) ist;
wobei das erste Element (30) ausgebildet ist, zwischen der ersten Position und der zweiten Position in der Öffnung (12) verschiebbar zu sein.

2. Die Hochdruckkraftstoffpumpe gemäß Anspruch 1, wobei die Anordnung einen Teil einer Entlüftungsdüsenanordnung bildet, die ausgebildet ist, um in eine existierende Bohrung in der Pumpe eingepasst zu werden, wobei die Anordnung einen Körper (11) aufweist, der ausgebildet ist, in die existierende Bohrung zu passen, aufweisend eine offene Entlüftungsdüse (12) durch den Körper (11), und die Entlüftungsdüsenanordnung innerhalb der offenen Entlüftungsdüse (12) angeordnet ist.

3. Die Pumpe gemäß Anspruch 1 oder 2, wobei die erste vorgegebene Strömungsrate in der ersten Position eine begrenzte Strömungsrate von Fluid durch die Öffnung(en) (32) verglichen mit der zweiten Position vorsieht.

4. Die Pumpe gemäß Anspruch 3, wobei die erste Position einen begrenzten Querschnitt der Öffnung(en) (32) vorsieht, der durch die Position eines Kopfteils des Leitungsabschnitts (42) in jeder der Öffnung(en) (32) erreicht wird, um einen im Wesentlichen versperrten Zustand für die jeweilige Öffnung (32) darzustellen.

5. Die Pumpe gemäß einem der Ansprüche 1 bis 4, wobei die zweite vorgegebene Strömungsrate in der zweiten Position eine höhere Strömungsrate von Fluid durch die Öffnung(en) (32) vorsieht.

6. Die Pumpe gemäß einem der Ansprüche 1 bis 5, wobei die zweite Position einen größeren Querschnitt für die Öffhung(en) (32) vorsieht, der durch die Position eines Halsteils des Leitungsabschnitts (42) in jeder der Öffnung(en) (32) erreicht wird, um einen im Wesentlichen nicht-versperrten Zustand für die jeweilige Öffnung (32) darzustellen.

7. Die Pumpe gemäß einem der Ansprüche 4 bis 6, wobei die Öffnung(en) (32) selektiv in Reaktion auf einen Druckanstieg in einer Druck-fluktuierenden Kammer vergrößert werden und in Reaktion auf einen Druckabfall in der Kammer in den begrenzten Querschnitt zurückgeführt werden.

8. Die Pumpe gemäß Anspruch 7, wobei in einem ersten Satz von Bedingungen, bei denen der Druck in der Kammer unter einem vorgegebenen Pegel ist, die zumindest eine Öffnung (32) im Wesentlichen durch den Kopfteil des Leitungsabschnitts (42) versperrt ist.

9. Die Pumpe gemäß einem der Ansprüche 7 oder 8, wobei in einem zweiten Satz von Bedingungen, bei denen der Druck in der Kammer über einem vorgegebenen Pegel ist, die zumindest eine Öffnung (32) teilweise durch den Halsteil des Leitungsabschnitts (42) versperrt ist.

10. Die Pumpe gemäß einem der Ansprüche 1 bis 9, wobei die Anordnung weiter ein elastisches Komprimierungselement (14) aufweist, das ausgebildet ist zum Ausüben einer Kraft auf eine zweite Fläche des ersten Elements (30) und ausgebildet ist zum Nachgeben (Komprimieren) bei Einwirkung von Druck über einem vorgegebenen Pegel, der auf das erste Element (30) wirkt.

11. Die Pumpe gemäß einem der Ansprüche 1 bis 10, wobei das erste Element (30) einen Körper mit einer konkaven Ausnehmung auf einer Seite davon aufweist, mit einer einzelnen Öffnung (32), die im Wesentlichen zentral durch das Element (30) und an einer Basis der konkaven Ausnehmung angeordnet ist.

12. Die Pumpe gemäß einem der Ansprüche 1 bis 11, wobei ein Basisteil des zweiten Elements (40) ein Umfangsprofil mit Dimensionen aufweist, die so konfiguriert sind, dass ein Gleiten des zweiten Elements (40) entlang der Achse der Öffnung (12) verhindert oder minimiert wird.

13. Die Pumpe gemäß Anspruch 12, wobei der Basisteil zumindest zwei durchgehende Bohrungen aufweist, um eine relativ unbeschränkte Strömung von Fluid über den Basisteil in der Öffnung (12) hinaus zu ermöglichen.

14. Die Pumpe gemäß einem der Ansprüche 11 bis 13, wenn abhängig von Anspruch 10, wobei das zweite Element (40) ein Widerlager in der Öffnung (12) vorsieht, das ausgebildet ist zum Vorsehen eines Sitzes (45c) für das elastische Komprimierungselement (14).

## Revendications

1. Pompe à carburant à haute pression comprenant un ensemble formant orifice d'évacuation, l'ensemble comprenant : un premier élément (30) adapté à être disposé en travers d'un orifice d'évacuation (12) et comprenant au moins une ouverture (32) dans celui-ci ; et un deuxième élément (40) avec une partie d'entrée (42) adaptée à être disposée dans ladite ou lesdites ouverture(s) (32), dans laquelle l'ensemble est adapté à fournir un premier débit prédéterminé de fluide à travers la ou les ouverture(s) (32) lorsque la partie d'entrée (42) est dans une première position dans la ou les ouverture(s) (32) et pour agrandir sélectivement la ou les ouverture(s) (32) pour fournir un deuxième débit prédéterminé de fluide à travers la ou les ouverture(s) (32) lorsque la partie d'entrée (42) est dans une deuxième position dans ladite ou lesdites ouverture(s) (32) ;
dans laquelle le premier élément (30) est adapté à pouvoir coulisser entre la première position et la deuxième position dans l'orifice (12).

2. Pompe à carburant à haute pression selon la revendication 1, dans laquelle l'ensemble fait partie d'un agencement d'orifice d'évacuation adapté à être monté dans un alésage existant dans la pompe, l'agencement comprenant un corps (11) adapté à se loger dans l'alésage existant, comprenant un orifice d'évacuation ouvert (12) à travers le corps (11) et l'ensemble formant orifice d'évacuation est disposé dans l'orifice d'évacuation ouvert (12).

3. Pompe selon l'une des revendications 1 ou 2, dans laquelle le premier débit prédéterminé dans la première position fournit un débit de fluide restreint à travers l'ouverture (32) par comparaison à la deuxième position.

4. Pompe selon la revendication 3, dans laquelle la première position fournit une section transversale restreinte à la ou aux ouverture(s) (32) obtenue par la position d'une partie de tête de la partie d'entrée (42) dans chacune des ouvertures (32) pour présenter une condition sensiblement obstruée à l'ouverture respective (32).

5. Pompe selon l'une quelconque des revendications 1 à 4, dans laquelle le deuxième débit prédéterminé dans la deuxième position fournit un débit de fluide augmenté à travers la ou les ouverture(s) (32).

6. Pompe selon l'une quelconque des revendications 1 à 5, dans laquelle la deuxième position fournit une section transversale augmentée à la ou aux ouverture(s) (32) obtenue par la position d'une partie col de la partie d'entrée (42) dans chacune des ouvertures (32) pour présenter un état partiellement non obstrué à l'ouverture respective (32).

7. Pompe selon l'une quelconque des revendications 4 à 6, dans laquelle la ou les ouverture(s) (32) sont sélectivement élargies en réponse à une augmentation de pression dans une chambre à variation de pression et sont remises à la section transversale restreinte en réponse à une diminution de pression dans ladite chambre.

8. Pompe selon la revendication 7, dans laquelle, dans un premier ensemble de conditions, où la pression dans la chambre est inférieure à un niveau prédéterminé, ladite au moins une ouverture (32) est sensiblement obstruée par la partie tête de la partie d'entrée (42).

9. Pompe selon l'une quelconque des revendications 7 ou 8, dans laquelle, dans un deuxième ensemble de conditions, où la pression dans la chambre est supérieure à un niveau prédéterminé, ladite au moins une ouverture (32) est partiellement obstruée par la partie col de la partie d'entrée (42).

10. Pompe selon l'une quelconque des revendications 1 à 9, dans laquelle l'ensemble comprend en outre un élément de compression élastique (14) adapté à exercer une force sur une deuxième face du premier élément (30) et réglé pour céder (comprimer) lorsqu'il est exposé à une pression supérieure à un niveau prédéterminé agissant sur le premier élément (30).

11. Pompe selon l'une quelconque des revendications 1 à 10, dans laquelle le premier élément (30) comprend un corps avec un creux concave sur un côté de celui-ci, avec une seule ouverture (32) disposée sensiblement au centre en travers de l'élément (30) et à une base du creux concave.

12. Pompe selon l'une quelconque des revendications 1 à 11, dans laquelle une partie de base du deuxième élément (40) comprend un profil périphérique dont les dimensions sont configurées de manière à empêcher ou minimiser le coulissement du deuxième élément (40) le long de l'axe de l'orifice (12).

13. Pompe selon la revendication 12, dans laquelle la partie de base comprend au moins deux alésages qui la traversent pour permettre un écoulement relativement non restreint de fluide par la partie de base dans l'orifice (12).

14. Pompe selon l'une quelconque des revendications 11 à 13 prise en dépendance de la revendication 10, dans laquelle le deuxième élément (40) présente une butée dans l'orifice (12) adaptée à constituer un siège (45c) pour l'élément de compression élastique (14).
